# EUROPEAN PATENT APPLICATION

(11) **EP 4 778 979 A1**
(43) Date of publication of application: **22.07.2026**
(21) Application number: 24865224.0
(22) Date of filing: 27.08.2024
(51) Int. Cl.: C08L 67/00, C08K 5/29, C08L 63/00, C08L 71/02, C08L 77/00

(54) **POLYESTER ELASTOMER RESIN COMPOSITION**

(30) Priority: 15.09.2023 JP 2023150208
(71) Applicant: TOYOBO MC Corporation, Osaka-shi, Osaka 530-0001 (JP)
(72) Inventor: OGURA, Hikaru, Otsu-shi, Shiga 520-0292 (JP); AKAISHI, Takuya, Otsu-shi, Shiga 520-0292 (JP); NAKASHIMA, Ayano, Otsu-shi, Shiga 520-0292 (JP); TAMASHIRO, Yuki, Otsu-shi, Shiga 520-0292 (JP)
(74) Representative: Vossius & Partner Patentanwälte Rechtsanwälte mbB
(86) International application number: PCT/JP2024/030450
(87) International publication number: WO 2025/057720

(57) **Abstract**

The present invention provides a polyester elastomer resin composition which has excellent squeak resistance and abrasion resistance while maintaining mechanical properties. The excellent squeak resistance and abrasion resistance are caused by the fact that a lubricant contained in the polyester elastomer resin composition does not dissolve in water when a molded product is subjected to cleaning with water, and that the lubricant does not dissolve in a non-polar solvent (heptane) when the molded product is subjected to cleaning with the non-polar solvent (heptane). A polyester elastomer resin composition containing 0.1 to 5 parts by mass of polyoxytetramethylene polyoxyethylene glycol (B) per 100 parts by mass of a polyester elastomer (A) which comprises a hard segment and at least one soft segment, wherein the hard segment consists of a polyester containing an aromatic dicarboxylic acid and an aliphatic and/or alicyclic diol as constituent components, and wherein the soft segment is selected from the group consisting of aliphatic polyether, aliphatic polyester, and aliphatic polycarbonate.

## Description

### Technical Field

The present invention relates to a polyester elastomer resin composition. More specifically, the present invention relates to a polyester elastomer resin composition which has excellent squeak resistance and abrasion resistance while maintaining mechanical properties. The excellent squeak resistance and abrasion resistance are caused by the fact that a lubricant contained in the polyester elastomer resin composition does not dissolve in water when a molded product made of the polyester elastomer resin composition is subjected to cleaning with water, and that the lubricant contained in the polyester elastomer resin composition does not dissolve in a non-polar solvent (heptane) when the molded product is subjected to cleaning with the non-polar solvent (heptane).

### Background Art

In order to impart abrasion resistance to thermoplastic polyester elastomers, addition of solid lubricants such as fatty acid amide compounds has been investigated (see Patent Documents 1 and 2). Also, addition of small amounts of liquid lubricants such as a single polyether or a copolymer polyether composed of two or more different alkylene units has been investigated (see

### Patent Documents 3 and 4).

In the method of adding a solid lubricant as described in Patent Documents 1 and 2, the solid lubricant quickly bleeds out onto the surface of the molded product, which can provide short-term abrasion resistance. However, during long-term sliding tests, the solid lubricant present on the surface is scraped off, making it impossible to achieve sustained abrasion resistance. Furthermore, if water is present in areas where the lubricant has been scraped off from the surface of the molded product, local variations in the friction state occur on the surface of the molded product, resulting in vibration noise and a phenomenon known as squeak.

In the method of adding a single kind of polyether as in Patent Documents 3 and 4, the lubricant remains on the surface of the molded product for a long period of time. However, because the polyether component constituting the lubricant is hydrophilic, when the surface of the molded product is subjected to cleaning with water, the polyether component is dissolved in water or washed away by water. Accordingly, the lubricant is easily scraped off from the surface of the molded product, causing problems such as squeaking when sliding begins.

In order to address these problems, there has been proposed a polyester elastomer resin composition that uses a solid lubricant such as a fatty acid amide compound in combination with a liquid lubricant of a copolymer polyether consisting of an ethylene oxide unit and a propylene oxide units (see Patent Document 5).

### Prior Art Documents

### Patent Documents

Patent Document 1: Japanese Patent Application Laid-Open (JP-A) No. 279557/93
Patent Document 2: Japanese Patent Application Laid-Open (JP-A) No. 2000-186765
Patent Document 3: Japanese Patent Application Laid-Open (JP-A) No. 2000-159991
Patent Document 4: Japanese Patent Application Laid-Open (JP-A) No. 2001-106885
Patent Document 5: Japanese Patent No. 6844687 Disclosure of the Invention

### Problem that the Invention is to Solve

The polyester elastomer resin composition of Patent Document 5 has some level of squeak resistance after cleaning with water. However, not only the squeak resistance after cleaning with water but also squeak resistance after cleaning with a non-polar solvent (heptane) is required for molded products that require higher levels of squeak resistance. It has been found that conventional techniques cannot achieve squeak resistance for both these two kinds of cleaning solvents.

The present invention has been accomplished in the light of such problem in the conventional techniques. It is an object of the present invention to provide a polyester elastomer resin composition which can have long-term, continuous abrasion resistance and excellent squeak resistance after cleaning while maintaining mechanical properties, due to the fact that the lubricant does not dissolve in water when the molded product is subjected to cleaning with water, and that the lubricant does not dissolve in heptane when the molded product is subjected to cleaning with heptane.

### Means for Solving the Problem

As a result of extensive research into achieving the above object, the present inventors have found that when polyoxytetramethylene polyoxyethylene glycol is used as a lubricant, the lubricant is not easily removed from the surface of molded products even during cleaning with water and cleaning with heptane, and thus it is possible to achieve excellent squeak resistance after cleaning and long-term stable abrasion resistance. As a result, the inventors have completed the present invention.

Thus, the present invention has the following configurations.
[1] A polyester elastomer resin composition characterized by containing 0.1 to 5 parts by mass of polyoxytetramethylene polyoxyethylene glycol (B) per 100 parts by mass of a polyester elastomer (A) which comprises a hard segment and at least one soft segment, wherein the hard segment consists of a polyester containing an aromatic dicarboxylic acid and an aliphatic and/or alicyclic diol as constituent components, and wherein the soft segment is selected from the group consisting of aliphatic polyether, aliphatic polyester, and aliphatic polycarbonate.
[2] The polyester elastomer resin composition according to [1], wherein the number-average molecular weight of the polyoxytetramethylene polyoxyethylene glycol (B) is 800 to 4000.
[3] The polyester elastomer resin composition according to [1] or [2], wherein the ratio of a tetramethylene oxide unit to an ethylene oxide unit in the polyoxytetramethylene polyoxyethylene glycol (B) is 10 : 90 to 90 : 10 (molar ratio).
[4] The polyester elastomer resin composition according to [1] or [2], wherein the soft segment of the polyester elastomer (A) is an aliphatic polyether.
[5] The polyester elastomer resin composition according to [1] or [2], wherein the polyester elastomer resin composition further contains 0.5 to 10 parts by mass of a polyamide resin (C) per 100 parts by mass of the polyester elastomer (A).
[6] The polyester elastomer resin composition according to [1] or [2], wherein the polyester elastomer resin composition further contains 0.1 to 5 parts by mass of a thickener (D) per 100 parts by mass of the polyester elastomer (A), and wherein the thickener (D) is at least one compound selected from an epoxy compound and a carbodiimide compound.
[7] The polyester elastomer resin composition according to [1] or [2], wherein a melt flow rate (MFR) value measured in accordance with a flow test method for thermoplastics defined in JIS K7210 at 230°C and a load of 2.16 kg is 3 g/10 min or less.

### Effects of the Invention

In the polyester elastomer resin composition of the present invention, the specific liquid lubricant bleeds out stably onto the surface layer of a molded product made of the polyester elastomer resin composition, and is not easily removed from the surface of the molded product even when the molded product is subjected to cleaning with water or heptane. Accordingly, it is possible to achieve excellent squeak resistance after cleaning and stable abrasion resistance over the long term.

### Mode for Carrying Out the Invention

### [Polyester elastomer (A)]

The polyester elastomer (A) used in the present invention comprises a hard segment consisting of a polyester containing an aromatic dicarboxylic acid and an aliphatic and/or alicyclic diol as constituent components, and at least one soft segment selected from the group consisting of aliphatic polyether, aliphatic polyester, and aliphatic polycarbonate.

An aromatic dicarboxylic acid constituting the polyester of the hard segment is not limited and may be a widely used common aromatic dicarboxylic acid. However, it is desirable that terephthalic acid or naphthalene dicarboxylic acid (among isomers thereof, 2,6-naphthalene dicarboxylic acid is preferred) is used as a main aromatic dicarboxylic acid. The content of such an aromatic dicarboxylic acid in all the dicarboxylic acids constituting the polyester of the hard segment is preferably 70 mol% or more, more preferably 80 mol% or more, and further preferably 90 mol% or more, or may be even 100 mol%. Examples of dicarboxylic acid components other than terephthalic acid and naphthalene dicarboxylic acid include: aromatic dicarboxylic acids such as diphenyl dicarboxylic acid, isophthalic acid, and sodium 5-sulfoisophthalate; alicyclic dicarboxylic acids such as cyclohexane dicarboxylic acid and tetrahydrophthalic anhydride; and aliphatic dicarboxylic acids such as succinic acid, glutaric acid, adipic acid, azelaic acid, sebacic acid, dodecanedioic acid, dimer acid, and hydrogenated dimer acid. These acid components are used to the extent that the melting point of the polyester elastomer (A) does not significantly decrease, and the amount thereof is 30 mol% or less, preferably 20 mol% or less, further preferably 10 mol% or less, and may be even 0 mol% of the total amount of acid components. When these dicarboxylic acids are used as raw materials for the polyester elastomer, esters of these dicarboxylic acids may be used. For example, not only terephthalic acid but also dimethyl terephthalate may be used as raw materials.

An aliphatic or alicyclic diol constituting the polyester of the hard segment is not limited and may be a widely used common aliphatic or alicyclic diol. However, it is desirable that an alkylene glycol having 2 to 8 carbon atoms is mainly used. Specific examples thereof include ethylene glycol, 1,3-propylene glycol, 1,4-butanediol, 1,6-hexanediol, and 1,4-cyclohexanedimethanol. Among these, 1,4-butanediol, or 1,4-cyclohexanedimethanol is preferred, and 1,4-butanediol is more preferred.

The polyester of the hard segment is preferably constituted from a component composed of a butylene terephthalate unit (a unit composed of terephthalic acid and 1,4-butanediol) or a butylene naphthalate unit (a unit composed of 2,6-naphthalene dicarboxylic acid and 1,4-butanediol) in terms of physical properties, moldability, and cost performance.

The soft segment is at least one member selected from the group consisting of aliphatic polyether, aliphatic polyester, and aliphatic polycarbonate. Examples of the aliphatic polyether include poly(ethylene oxide) glycol, poly(propylene oxide) glycol, poly(tetramethylene oxide) glycol, poly(hexamethylene oxide) glycol, poly (trimethylene oxide) glycol, a copolymer of ethylene oxide and propylene oxide, an ethylene oxide adduct of poly(propylene oxide) glycol, and a copolymer of ethylene oxide and tetrahydrofuran.

Examples of the aliphatic polyester include poly(ε-caprolactone), polyenantholactone, polycaprolactone, and polybutylene adipate. Among these aliphatic polyethers and/or aliphatic polyesters, poly(tetramethylene oxide) glycol, an ethylene oxide adduct of poly(propylene oxide) glycol, poly(*ε*-caprolactone), polybutylene adipate, etc. are preferred from the viewpoint of the elastic properties of the resulting polyester elastomer (A). Among these, poly(tetramethylene oxide) glycol is particularly preferred.

The aliphatic polycarbonate is preferably one mainly composed of a residue of an aliphatic diol having 2 to 12 carbon atoms. Examples of such an aliphatic diol include ethylene glycol, 1,3-propylene glycol, 1,4-butanediol, 1,5-pentanediol, 1,6-hexanediol, 1,8-octanediol, 2,2-dimethyl-1,3-propanediol, 3-methyl-1,5-pentanediol, 2,4-diethyl-1,5-pentanediol, 1,9-nonanediol, and 2-methyl-1,8-octanediol. Particularly, an aliphatic diol having 5 to 12 carbon atoms is preferred in terms of flexibility and low-temperature characteristics of the resulting polyester elastomer. These components may be used alone or, if necessary, in combination of two or more of them on a case-by-case basis as will be described below.

As to an aliphatic polycarbonate diol, one having a low melting point (e.g. 70°C or lower) and a low glass transition temperature is preferred. An aliphatic polycarbonate diol based on 1,6-hexanediol, which is generally used for forming a soft segment of a polyester elastomer, has a glass transition temperature of as low as about -60°C and a melting point of about 50°C and is therefore excellent in low-temperature characteristics. Alternatively, an aliphatic polycarbonate diol obtained by, for example, copolymerizing the above aliphatic polycarbonate diol with an appropriate amount of 3-methyl-1,5-pentanediol has a glass transition point slightly higher than that of the original aliphatic polycarbonate diol but has a lower melting point or becomes amorphous. Therefore, such aliphatic polycarbonate diol corresponds to an aliphatic polycarbonate diol having excellent low-temperature characteristics. Further, an aliphatic polycarbonate diol based on, for example, 1,9-nonanediol and 2-methyl-1,8-octanediol has a sufficiently low melting point of about 30°C and a sufficiently low glass transition temperature of about -70°C and therefore corresponds to an aliphatic polycarbonate diol having excellent low-temperature characteristics.

From the viewpoint of solving the problems of the present invention, the soft segment of the polyester elastomer (A) is preferably an aliphatic polyether.

The polyester elastomer (A) is preferably a copolymer mainly composed of terephthalic acid, 1,4-butanediol, and poly(tetramethylene oxide) glycol. The content of terephthalic acid in dicarboxylic acid components constituting the polyester elastomer (A) is preferably 40 mol% or more, more preferably 70 mol% or more, further preferably 80 mol% or more, and particularly preferably 90 mol% or more. The total content of 1,4-butanediol and poly(tetramethylene oxide) glycol in glycol components constituting the polyester elastomer (A) is preferably 40 mol% or more, more preferably 70 mol% or more, further preferably 80 mol% or more, and particularly preferably 90 mol% or more.

The number-average molecular weight of the poly(tetramethylene oxide) glycol is preferably 500 to 4000. If the number-average molecular weight is less than 500, elastomeric properties may be less likely to be exhibited. On the other hand, if the number-average molecular weight exceeds 4000, there is a case where compatibility with the polyester moiety of the hard segment decreases, which makes it difficult to copolymerize them in a block manner. The number-average molecular weight of the poly(tetramethylene oxide) glycol is more preferably 800 or more and 3000 or less, and further preferably 1000 or more and 2500 or less.

The amount of the poly(tetramethylene oxide) glycol to be copolymerized is preferably 5 to 50 mol% relative to the total amount of the glycol components constituting the polyester elastomer (A). The amount of the poly(tetramethylene oxide) glycol is more preferably 5 mol% or more and 30 mol% or less, further preferably 5 mol% or more and 20 mol% or less, particularly preferably 7 mol% or more and 18 mol% or less, and the most preferably 8 mol% or more and 15 mol% or less, relative to the total amount of the glycol components.

The mass ratio between the hard segment and the soft segment of the polyester elastomer (A) is generally preferably within a range of 30 : 70 to 95 : 5 (hard segment : soft segment), more preferably within a range of 40 : 60 to 90 : 10, further preferably within a range of 45 : 55 to 87 : 13, and particularly preferably within a range of 50 : 50 to 85 : 15.

The reduced viscosity of the polyester elastomer (A) as measured by a measurement method that will be described later is preferably 0.5 dl/g or more and 3.5 dl/g or less. If the reduced viscosity is less than 0.5 dl/g, the resin may have low durability, and if the reduced viscosity exceeds 3.5 dl/g, processability in injection molding or the like may be insufficient. The reduced viscosity of the polyester elastomer is more preferably 1.0 dl/g or more and 3.0 dl/g or less, and further preferably 1.5 dl/g or more and 2.8 dl/g or less. Also, the acid value of the polyester elastomer (A) is preferably 200 eq/t or less and more preferably 50 eq/t or less.

The melting point of the polyester elastomer (A) is preferably 150 to 230°C and more preferably 175 to 210°C. If the melting point of the polyester elastomer (A) is less than 150°C, heat resistance may decrease due to a large amount of the soft segment. If the melting point of the polyester elastomer (A) exceeds 230°C, flexibility may decrease due to a large amount of the hard segment.

The polyester elastomer (A) can be produced by a publicly-known method (e.g. Japanese Patent Application Laid-Open (JP-A) No. 182954/98 and WO 2007/072748). For example, any one of the following methods may be used: a method in which a lower alcohol diester of a dicarboxylic acid, an excessive amount of a low-molecular-weight glycol, and a soft segment component are subjected to a transesterification reaction in the presence of a catalyst, and the resulting reaction product is subjected to polycondensation; a method in which a dicarboxylic acid, an excessive amount of a glycol, and a soft segment component are subjected to an esterification reaction in the presence of a catalyst, and the resulting reaction product is subjected to polycondensation; a method in which a hard segment is previously prepared, and a soft segment component is added thereto so that randomization is caused by a transesterification reaction; a method in which a hard segment and a soft segment are linked with a chain-linking agent; and when poly(*ε*-caprolactone) is used for a soft segment, a method in which an *ε*-caprolactone monomer is subjected to an addition reaction to a hard segment.

### [Polyoxytetramethylene polyoxyethylene glycol (B)]

The polyoxytetramethylene polyoxyethylene glycol (B) used in the present invention is used as a lubricant for improving friction and abrasion properties. The polyoxytetramethylene polyoxyethylene glycol (B) is a polyoxyalkylene glycol compound in which an alkylene oxide unit is composed of a tetramethylene oxide unit and an ethylene oxide unit. The number-average molecular weight of the polyoxytetramethylene polyoxyethylene glycol (B) is preferably 800 to 4000, more preferably 1200 to 4000, and particularly preferably 1500 to 3500. If the number-average molecular weight is below the lower limit, the rate at which the lubricant precipitates (bleeds out) on the surface of a molded product may be too fast, and the lubricant may easily be scraped off from the surface of the molded product during an abrasion test. In other words, if the number-average molecular weight of the polyoxytetramethylene polyoxyethylene glycol (B) is equal to or greater than the lower limit, the rate at which the lubricant precipitates (bleeds out) on the surface of a molded product is appropriately fast, and the lubricant is not easily scraped off from the surface of the molded product during an abrasion test. This effect can be particularly enhanced when the number-average molecular weight of the polyoxytetramethylene polyoxyethylene glycol (B) is 1200 or more. If the number-average molecular weight of the polyoxytetramethylene polyoxyethylene glycol (B) exceeds the upper limit, the rate at which the lubricant precipitates (bleeds out) on the surface of a molded product may be too slow, and thus the abrasion resistance and squeak resistance may not be fully exhibited. The number-average molecular weight can be measured by the method described in the Examples section below.

The polyoxytetramethylene polyoxyethylene glycol (B) used in the present invention is preferably represented by the following formula (1).

### [formula]

**HO-[(C₄H₈O)ₐ-(C₂H₄O)_{b}]ₙ-H** **(1)**

In the formula (1), a, b, and n represent integers of 1 or greater. (However, the values of a and b may be different for each repeat in the square brackets.) In this case, the ratio of tetramethylene oxide unit to ethylene oxide unit (tetramethylene oxide unit : ethylene oxide unit) is preferably 10 : 90 to 90 : 10 (molar ratio) and more preferably 30 : 70 to 60 : 40 (molar ratio). Furthermore, it is preferable that the tetramethylene oxide units and the ethylene oxide units are copolymerized randomly.

The content of the polyoxytetramethylene polyoxyethylene glycol (B) may vary depending on the affinity with the polyester elastomer (A) used or the required properties of the resulting composition. Two or more kinds of the polyoxytetramethylene polyoxyethylene glycol (B) may be used in combination. Further, the polyoxytetramethylene polyoxyethylene glycol (B) may be used in combination with other lubricant components. The content of each component described below refers to the content in the polyester elastomer resin composition.

The content of the polyoxytetramethylene polyoxyethylene glycol (B) is 0.1 to 5 parts by mass per 100 parts by mass of the polyester elastomer (A). It is preferably 0.3 to 5 parts, and more preferably 0.8 to 4 parts. If the content is less than 0.1 part by mass, the effect obtained by adding the polyoxytetramethylene polyoxyethylene glycol (B) (the effect of suppressing squeak and abrasion) may not be significantly exhibited. On the other hand, if the content exceeds 5 parts by mass, the melt viscosity of the polyester elastomer may be significantly reduced, which may make molding impossible. Also, the surface hardness and mechanical properties of the molded product may be reduced. Further, the polyoxytetramethylene polyoxyethylene glycol (B) may significantly ooze out from the surface of the molded product, which may cause adverse effects such as marring the appearance of the molded product and scattering to surrounding parts.

At the molecular level, the polyoxytetramethylene polyoxyethylene glycol (B) is an aggregate of many kinds of molecules with different properties. Therefore, the polyoxytetramethylene polyoxyethylene glycol (B) tends to gradually bleed out from the polyester elastomer, and can exert its abrasion resistance and anti-squeak effects over a long period of time.

The reason why the polyoxytetramethylene polyoxyethylene glycol (B) is not scraped off from the surface of the molded product during cleaning with water is thought to be as follows: The tetramethylene oxide unit of the polyoxytetramethylene polyoxyethylene glycol (B) has excellent compatibility with the polyester elastomer (A). On the other hand, the ethylene oxide unit of the polyoxytetramethylene polyoxyethylene glycol (B) has poor compatibility with the polyester elastomer (A). Therefore, it is thought that an appropriate interaction between the polyester elastomers (A) and the polyoxytetramethylene polyoxyethylene glycol (B) allows the lubricant to bleed out stably to the surface of the molded product, and that this appropriate interaction allows the lubricant to remain even during cleaning with water.

The reason why the polyoxytetramethylene polyoxyethylene glycol (B) is not scraped off from the surface of the molded product during cleaning with heptane is thought to be as follows: The ethylene oxide unit of the polyoxytetramethylene polyoxyethylene glycol (B) has a high ether group ratio in the alkylene oxide unit and is more polar than the tetramethylene oxide unit. Therefore, it is thought that the polyoxytetramethylene polyoxyethylene glycol (B) has low solubility in heptane and exhibits the effect of allowing the lubricant to remain even during cleaning with heptane.

### [Polyamide resin (C)]

The polyamide resin (C) optionally used in the present invention serves to improve heat aging resistance of the polyester elastomer. The polyamide resin (C) is a polymer compound having an amide bond in the molecular chain. Examples of the polyamide resin (C) include: polyamides obtained from diamines and dicarboxylic acids, wherein the diamines have an aliphatic hydrocarbon group having 2 to 20 carbon atoms or a substituted aliphatic hydrocarbon group thereof, or an aromatic hydrocarbon group having 6 to 16 carbon atoms or a substituted aromatic hydrocarbon group thereof, and wherein the dicarboxylic acids have an aliphatic hydrocarbon group having 2 to 20 carbon atoms or a substituted aliphatic hydrocarbon group thereof, or an aromatic hydrocarbon group having 6 to 16 carbon atoms or a substituted aromatic hydrocarbon group thereof; polymers obtained from lactams; and polymers obtained from ω-aminocarboxylic acids. Examples thereof include polymers of salts obtained by reacting adipic acid, sebacic acid, linoleic acid, dodecanedioic acid, or the like, with ethylenediamine, hexamethylenediamine, metaxylylenediamine, or the like. These copolymers or combinations of two or more kinds thereof may also be used. Specific examples thereof include: polyamide 4, polyamide 6, polyamide 7, polyamide 8, polyamide 9, polyamide 11, and polyamide 12, which are obtained from lactam or ω-aminocarboxylic acid; polyamide 66, polyamide 69, polyamide 610, polyamide 611, polyamide 612, polyamide 6T, polyamide 6I, and polyamide MXD6, which are obtained from diamine and dicarboxylic acid; and copolymers thereof such as polyamide 6/66, polyamide 6/610, polyamide 6/6T, polyamide 6I/6T, polyamide 6/66/12, etc. Among these polyamide resins, more excellent effects can be achieved when polyamide 6 and/or a binary or ternary or higher copolymer polyamide resin is used. As to the polyamide resin (C), a binary or ternary or higher copolymer polyamide resin is more preferred.

The polyamide resin (C) preferably has an amine value of 50 to 2000 eq/t. When the amine value is in this range, the effect of improving the heat aging resistance of the polyester elastomer is enhanced. The amine value is more preferably 70 to 1000 eq/t, further preferably 100 to 700 eq/t, and particularly preferably 100 to 550 eq/t.

The content of polyamide resin (C) is preferably 0.5 to 10 parts by mass per 100 parts by mass of the polyester elastomer (A). If the content of polyamide resin (C) is greater than this range, the properties inherent in the polyester elastomer (A) may be impaired. If the content of polyamide resin (C) is less than this range, the effect of improving the heat aging resistance may be small. The content of the polyamide resin (C) is more preferably 1 to 7 parts by mass and particularly preferably 1 to 3 parts by mass per 100 parts by mass of the polyester elastomer (A).

### [Thickener (D)]

The thickener (D) optionally used in the present invention is a reactive compound having a functional group capable of reacting with a hydroxyl group or a carboxyl group of the polyester elastomer (A) (hereinafter sometimes simply referred to as "reactive compound"). The functional group is preferably at least one member selected from the group consisting of an epoxy group (glycidyl group), an acid anhydride group, a carbodiimide group, and an isocyanate group. The reactive compound preferably has two or more such functional groups per molecule. The functional group is more preferably an epoxy group (glycidyl group) or a carbodiimide group. The thickener (D) is particularly preferably an epoxy compound and/or a carbodiimide compound.

The epoxy compound is a polyfunctional epoxy compound having two or more epoxy groups. Specific examples of the polyfunctional epoxy compound having two or more epoxy groups include 1,6-dihydroxy naphthalene diglycidyl ether or 1,3-bis(oxiranylmethoxy)benzene having two epoxy groups; 1,3,5-tris(2,3-epoxypropyl)-1,3,5-triazine-2,4,6(1H,3H,5H)-trione or diglycerol triglycidyl ether having three epoxy groups; and a 1-chloro-2,3-epoxypropane/formaldehyde/2,7-naphthalene diol polycondensation product or pentaerythritol polyglycidyl ether having four epoxy groups. Among these, a polyfunctional epoxy compound whose skeleton has heat resistance is preferred. Particularly preferred is a bifunctional or tetrafunctional epoxy compound having a naphthalene structure in its skeleton or a trifunctional epoxy compound having a triazine structure in its skeleton. In consideration of the degree of an increase in the solution viscosity of the polyester elastomer (A), the effect of efficiently reducing the acid value of the polyester elastomer (A), and the degree of gelation caused by aggregation/solidification of the epoxy itself, a bifunctional or trifunctional epoxy compound is preferred.

The carbodiimide compound is not limited as long as it is a polycarbodiimide having two or more carbodiimide groups (-N=C=N- structure) per molecule, and examples thereof include an aliphatic polycarbodiimide compound, an alicyclic polycarbodiimide compound, an aromatic polycarbodiimide compound, and copolymers of two or more of them. Preferred is an aliphatic polycarbodiimide compound or an alicyclic polycarbodiimide compound.

The polycarbodiimide compound can be obtained by, for example, subjecting a diisocyanate compound to a decarbonation reaction. Examples of the diisocyanate compound that can be used herein include 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, 1,5-naphthylene diisocyanate, hexamethylene diisocyanate, dicyclohexylmethane diisocyanate, cyclohexane-1,4-diisocyanate, xylylene diisocyanate, isophorone diisocyanate, methylcyclohexane diisocyanate, tetramethylxylylene diisocyanate, and 1,3,5-triisopropylphenylene-2,4-diisocyanate. These may be used alone or as a copolymer of two or more of them. Further, a branched structure may be introduced, or a functional group other than a carbodiimide group or an isocyanate group may be introduced by copolymerization. Further, when the diisocyanate compound is used, terminal isocyanates may be as they are. However, the terminal isocyanates may be reacted so as to control the degree of polymerization, or some of the terminal isocyanates may be blocked.

The polycarbodiimide compound is particularly preferably an alicyclic polycarbodiimide derived from dicyclohexylmethane diisocyanate, cyclohexane-1,4-diisocyanate, or isophorone diisocyanate. Particularly, a polycarbodiimide derived from dicyclohexylmethane diisocyanate or isophorone diisocyanate is better.

The polycarbodiimide compound preferably contains 2 to 50 carbodiimide groups per molecule in terms of stability and handleability. The polycarbodiimide compound more preferably contains 5 to 30 carbodiimide groups per molecule. When a polycarbodiimide is obtained from a diisocyanate compound, the number of carbodiimides in the molecule of the polycarbodiimide (i.e., the number of carbodiimide groups) corresponds to the degree of polymerization. For example, the degree of polymerization of a polycarbodiimide obtained by linearly linking 21 molecules of the diisocyanate compound is 20, and the number of carbodiimide groups in the molecular chain is 20. Usually, the polycarbodiimide compound is a mixture of molecules different in length. Therefore, the number of carbodiimide groups is expressed as an average value. When the polycarbodiimide compound contains carbodiimide groups whose number is within the above range and is solid at about room temperature, the polycarbodiimide compound can be powdered and is therefore excellent in workability and compatibility when mixed with the polyester elastomer (A) and is also preferred in terms of uniform reactivity and bleed-out resistance. It should be noted that the number of carbodiimide groups can be measured by, for example, an ordinary method (a method in which a solution obtained by dissolution in an amine is subjected to back titration with hydrochloric acid).

From the viewpoint of stability and handleability, it is preferred that the polycarbodiimide compound has an isocyanate group at its terminal and has an isocyanate group content of 0.5 to 4% by mass. More preferably, the polycarbodiimide compound has an isocyanate group content of 1 to 3% by mass. Particularly, the polycarbodiimide compound is preferably a polycarbodiimide derived from dicyclohexylmethane diisocyanate or isophorone diisocyanate and having an isocyanate group content within the above range. It should be noted that the isocyanate group content can be measured by an ordinary method (a method in which a solution obtained by dissolution in an amine is subjected to back titration with hydrochloric acid).

The content of the thickener (D) is preferably 0.1 to 5 parts by mass, per 100 parts by mass of the polyester elastomer (A). If the content of the thickener (D) is less than 0.1 part by mass, a desired molecular chain extension effect is insufficient. If the content of the thickener (D) exceeds 5 parts by mass, a thickening effect is excessive, which tends to adversely affect moldability or to adversely affect the mechanical properties of a molded product. When the thickener (D) is an epoxy compound and the content of the thickener (D) exceeds 5 parts by mass, a molded product may have surface irregularities due to aggregation and curing of the epoxy compound. When the thickener (D) is a carbodiimide compound and the content of the thickener (D) exceeds 5 parts by mass, the polyester elastomer (A) may be hydrolyzed due to the basicity of the polycarbodiimide compound, which tends to adversely affect the mechanical properties.

The thickener (D) may be either an epoxy compound or a carbodiimide compound. The thickener (D) may also be a combination of an epoxy compound and a carbodiimide compound. In this case, the upper limits of the respective contents are proportionally determined according to the content ratio of the epoxy compound and the carbodiimide compound. For example, when the epoxy compound and the carbodiimide compound are used in a mass ratio of 50 : 50, the upper limit of the epoxy compound may be 2.5 parts by mass, and the upper limit of the carbodiimide compound may be 2.5 parts by mass.

### [Other additives]

The resin composition of the present invention preferably contains a general-purpose antioxidant such as an aromatic amine-based antioxidant, a hindered phenol-based antioxidant, a phosphorus-based antioxidant, or a sulfur-based antioxidant, in addition to the above components (A) to (D). These may be used in combination of two or more of them. Specific examples of the aromatic amine-based antioxidant include phenyl naphthylamine, 4,4'-dimethoxy diphenylamine, 4,4'-bis(α,α-dimethylbenzyl)diphenylamine, and 4-isopropoxy diphenylamine.

As to the hindered phenol-based antioxidant, a general-purpose compound may be used, but compounds having a molecular weight of 500 or more, such as N,N'-hexamethylene-bis(3,5-di-t-butyl-4-hydroxyhydrocinnamamide) and tetrakis[methylene-3(3,5-di-t-butyl-4-hydroxyphenyl)propionate]methane, are preferred because they are less likely to volatilize in a high-temperature atmosphere.

Examples of the phosphorus-based antioxidant include compounds containing phosphorus, such as phosphoric acid, phosphorous acid, hypophosphorous acid derivatives, phenylphosphonic acid, polyphosphonate, and diphosphite-based compounds. Specific examples thereof include triphenyl phosphite, diphenyldecyl phosphite, phenyldiisodecyl phosphite, tri(nonylphenyl) phosphite, bis(2,4-di-t-butylphenyl) pentaerythritol diphosphite, and bis(2,6-di-t-butyl-4-methylphenyl) pentaerythritol diphosphite.

Examples of the sulfur-based antioxidant include compounds containing sulfur, such as a thioether-based antioxidant, a dithioic acid salt-based antioxidant, a mercaptobenzimidazole-based antioxidant, a thiocarbalinide-based antioxidant, and a thiodipropionic acid ester-based antioxidant. Specific examples thereof include dilauryl thiodipropionate, distearyl thiodipropionate, didodecyl thiodipropionate, ditetradecyl thiodipropionate, dioctadecyl thiodipropionate, pentaerythritol tetrakis(3-dodecylthiopropionate), thiobis(N-phenyl-β-naphthylamine), 2-mercaptobenzothiazole, 2-mercaptobenzoimidazole, tetramethylthiuram monosulfide, tetramethylthiuram disulfide, nickel dibutyldithiocarbamate, nickel isopropylxanthate, and trilauryl trithiophosphite. Particularly, the thioether-based antioxidant having a thioether structure can suitably be used because it receives oxygen from an oxidized substance to reduce the substance.

The content of any of the above antioxidants is preferably 0.01 to 3 parts by mass, more preferably 0.05 to 2 parts by mass, and further preferably 0.1 to 1 part by mass per 100 parts by mass of the polyester elastomer (A).

The composition and the compositional ratio of the polyester elastomer resin composition of the present invention may be calculated from the ratio of proton integrals of ¹H-NMR which are measured by dissolving a sample in a solvent such as deuterated chloroform.

When the resin composition of the present invention is required to have weatherability, an ultraviolet absorber and/or a hindered amine-based compound are/is preferably added. For example, a benzophenone-based light stabilizer, a benzotriazole-based light stabilizer, a triazole-based light stabilizer, a nickel-based light stabilizer, or a salicyl-based light stabilizer can be used. The amount of such a light stabilizer to be added is preferably 0.1% or more and 5% or less relative to the mass of the resin composition.

The polyester elastomer resin composition of the present invention may contain various other additives. As to such additives, a resin other than those described above, an inorganic filler, a stabilizer, and an anti-aging agent can be added to such an extent which does not impair the features of the present invention. Additives other than these, such as a color pigment, an inorganic/organic filler, a coupling agent, a tackiness improver, a quencher, a stabilizer such as a metal deactivator, and a flame retardant may also be added. The total content of these various additives to be added is preferably 20 parts by mass or less and more preferably 10 parts by mass or less per 100 parts by mass of the polyester elastomer (A).

The MFR of the polyester elastomer resin composition of the present invention is not particularly limited, but is preferably 0.1 to 30 g/10 min for the purpose of obtaining a general injection-molded product. However, from the viewpoint of further improving the heat aging resistance and blow moldability, the MFR is preferably 3 g/10 min or less and more preferably 0.1 to 3 g/10 min. The MFR can be measured by the method described in the Examples section below.

The resin composition of the present invention may be produced by a method in which each of components are melt-kneaded using a conventional thermoplastic resin mixing machine typified by a single- or twin-screw melt-kneading machine or a kneader-type heating machine, and then the resultant is pelletized in a subsequent pelletization step.

### Examples

In order to illustrate the present invention, Examples will be shown below although the present invention shall not be limited at all by those Examples. Incidentally, each of the measured values mentioned in Examples was measured by the following methods.

### Melting point:

A differential scanning calorimeter "DSC220" manufactured by Seiko Instruments & Electronics Ltd. was used. Specifically, 5 mg of a measurement sample was placed in an aluminum pan, a cover was pressed down to seal the pan, and the pan was held at 250°C for 5 minutes to completely melt the sample. Then, the sample was rapidly cooled with liquid nitrogen and then a thermogram curve was measured from -150°C to 250°C at a heating rate of 20°C/min. From the thermogram curve, an endothermic peak temperature was determined and defined as the melting point.

### Reduced viscosity:

In 25 mL of a mixed solvent of phenol/tetrachloroethane (mass ratio 6/4), 0.10 g of a fully dried resin was dissolved. The reduced viscosity of the resulting solution was measured at 30°C using an Ubbelohde viscometer.

### Acid value:

A sample of 0.2 g was precisely weighed, dissolved in 20 mL of chloroform, and titrated with 0.01 N potassium hydroxide (ethanol solution) to determine an acid value. Phenolphthalein was used as an indicator.

### Amine value (eq/ton):

A sample of 3 g was weighed and dissolved in 80 mL of m-cresol. Using "AT-500N" manufactured by Kyoto Electronics Manufacturing Co., Ltd., the solution was titrated by potentiometric titration with a 0.05 mol/L perchloric acid methanol solution as a titrant to determine the amine value.

### Relative viscosity:

Method for measuring the relative viscosity of polyamide resins is generally classified into three methods, each of which uses one of the following three kinds of solvents for dissolution: meta-cresol, 96% sulfuric acid solution, and 90% formic acid solution. The relative viscosity of polyamide resin (C) in the present invention was measured in a 98% sulfuric acid solution (polyamide resin concentration 1 g/dl, temperature 25°C).

### Number-average molecular weight of the polyoxytetramethylene polyoxyethylene glycol (B):

A sample was dissolved in deuterated chloroform (CDCl₃)/trifluoroacetic acid (TFA) = 85/15 (volume ratio) and measured by ¹H-NMR. The number-average molecular weight was calculated from the spectral ratio of tetramethylene oxide and ethylene oxide and the amount of terminal groups obtained by the ¹H-NMR measurement.

The same measurement was also carried out for (B'-1) used in the Comparative Example.

### The following raw materials were used:

[Polyester elastomer (A)]
- (A-1) Polyester elastomer A1

According to the method described in Reference Example 1 of paragraph [0017] of Japanese Patent Application Laid-Open (JP-A) No. 59491/97, a polyester elastomer A1 having a molar ratio of terephthalic acid/1,4-butanediol/poly(tetramethylene oxide) glycol (PTMG; number-average molecular weight 1500) of 100/88/12 was prepared.

This polyester elastomer A1 had a melting point of 197°C, a reduced viscosity of 1.86 dl/g, and an acid value of 38 eq/t.
- (A-2) Polyester elastomer A2

According to the method described in Reference Example 1 of paragraph [0017] of Japanese Patent Application Laid-Open (JP-A) No. 59491/97, a polyester elastomer A2 having a molar ratio of terephthalic acid/1,4-butanediol/poly(tetramethylene oxide) glycol (PTMG; number-average molecular weight 2000) of 100/90/10 was prepared.

This polyester elastomer A2 had a melting point of 205°C, a reduced viscosity of 2.15 dl/g, and an acid value of 35 eq/t.

[Polyoxytetramethylene polyoxyethylene glycol (B)]
- (B-1) POLYCERIN DC-1800E (manufactured by NOF Corporation, number-average molecular weight 1800, (tetramethylene oxide unit) / (ethylene oxide unit) = 46 / 54 [molar ratio])
- (B-2) POLYCERIN DC-3000E (manufactured by NOF Corporation, number-average molecular weight 3000, (tetramethylene oxide unit) / (ethylene oxide unit) = 53 / 47 [molar ratio])
- (B-3) POLYCERIN DC-1100 (manufactured by NOF Corporation, number-average molecular weight 1000, (tetramethylene oxide unit) / (ethylene oxide unit) = 35 / 65 [molar ratio])

[Other polyester glycol compounds]
- (B'-1) POLYCERIN DCB-2000 (polyoxytetramethylene polyoxypropylene glycol) (manufactured by NOF Corporation, number-average molecular weight 2000, (tetramethylene oxide unit) / (propylene oxide unit) = 61 / 39 [molar ratio])
- (B'-2) PEG-1540 (polyethylene glycol) (manufactured by Sanyo Chemical Industries, Ltd., number-average molecular weight 1450)
- (B'-3) PTMG3000 (poly(tetramethylene oxide) glycol) (manufactured by Mitsubishi Chemical Corporation, number-average molecular weight 3000)

[Polyamide resin (C)]
- (C-1) Polyamide resin C1 (polyamide 6/66/12) (relative viscosity 1.3, amine value 490 eq/t)

[Thickener (D)]
- (D-1) TEPIC-S (triazine skeleton-containing trifunctional epoxy compound) (manufactured by Nissan Chemical Corporation)
- (D-2) CARBODILITE HMV-15CA (alicyclic polycarbodiimide compound) (manufactured by Nisshinbo Chemical Inc.)

[Other additives]
- Aromatic amine antioxidant: Nonflex DCD (manufactured by Ouchi Shinko Chemical Co., Ltd.) (4,4'-bis(α,α-dimethylbenzyl)diphenylamine)
- Hindered phenol-based antioxidant: Irganox 1010 (manufactured by BASF)
- Hindered phenol-based antioxidant: Irganox 1098 (manufactured by BASF)
- Sulfur-based antioxidant: Lasmit LG (Dai-ichi Kogyo Seiyaku Co., Ltd.) (dilauryl thiodipropionate)

### Examples 1 to 8 and Comparative Examples 1 to 6

The above components were dry-blended in the ratios shown in Table 1, and kneaded and pelletized using a twin-screw extruder. The pellets of this polyester elastomer resin composition were used to perform the following evaluations. Furthermore, the test pieces used for surface hardness, bleed amount, lubricant residual ratio after cleaning with water, lubricant residual ratio after cleaning with heptane, abrasion test, and squeak test were injection-molded products (100 mm square test pieces: width 100 mm, length 100 mm, thickness 2.0 mm) prepared in an injection molding machine at a cylinder temperature of 240°C and a mold temperature of 50°C. The results are shown in Table 1.

### Surface hardness:

The surface hardness was measured in an environment of 23°C in accordance with the test method described in ISO 48-4. Three 100 mm square test pieces were stacked on top of each other, and a needle tip was dropped onto them. The value 15 seconds after the test piece and the needle tip came into contact was read to define as the surface hardness.

### Melt viscosity (MFR):

A melt flow rate (MFR: g/10 min) was measured at a temperature of 230°C and a load of 2160 g in accordance with the test method (Method A) described in JIS K7210. Compositions with a moisture content of 0.1% by mass or less were used for the measurement.

### Bleed amount (23°C):

The 100 mm square test piece was left to stand for 2 weeks in an environment of 23°C/50% RH. Thereafter, the mass of the molded product was measured, the surface of the molded product was carefully wiped with Kimwipe, and the mass of the molded product was measured again. The amount of lubricant bleeding was calculated from the difference in mass before and after wiping.

### Abrasion test (presence or absence of abrasion powder) :

The 100 mm square test piece was left to stand in an environment of 23°C/50% RH for two weeks. Then, a thrust abrasion test according to JIS K7213 was carried out to check for the presence or absence of abrasion powder on the surface of the molded product, and the results were evaluated according to the following criteria. SUS-65C was used as a cylindrical test piece for the thrust abrasion test, and a sliding test was carried out under a load of 1.0 MPa, a sliding speed of 100 rpm, and a test time of 60 minutes.
Abrasion powders are not observed on the surface of the molded product: A
A small amount of abrasion powders is observed on the surface of the molded product: B
Abrasion powders are observed on the surface of the molded product: C

### Lubricant residual ratio after cleaning with water:

The 100 mm square test piece was left to stand in an environment of 23°C/50% RH for two weeks. The molded product was then sprayed with water and wiped using a thrust abrasion tester. A wiping cloth was placed between the cylindrical test piece SUS-65C and the molded product, and the wiping test was carried out under a load of 0.5 MPa, a sliding speed of 50 rpm, and a wiping time of 5 minutes.

The surface of the molded product before and after wiping was compared by the measurement of infrared absorption spectroscopy (IR), and the lubricant residual ratio was calculated from the results to check whether or not a peak derived from the lubricant remained after wiping. Specifically, the lubricant residual ratio is expressed as [(absorbance before cleaning) - (absorbance after cleaning)] / [(absorbance before cleaning) - (absorbance derived from the polyester elastomer)] × 100 in the region of 1360 to 1370 cm⁻¹.

### Lubricant residual ratio after cleaning with heptane:

The 100 mm square test piece was left to stand in an environment of 23°C/50% RH for two weeks. The molded product was then sprayed with heptane and wiped using a thrust abrasion tester. A wiping cloth was placed between the cylindrical test piece SUS-65C and the molded product, and the wiping test was carried out under a load of 0.5 MPa, a sliding speed of 50 rpm, and a wiping time of 5 minutes.

The surface of the molded product before and after wiping was compared by the measurement of infrared absorption spectroscopy (IR), and the lubricant residual ratio was calculated from the results to check whether or not a peak derived from the lubricant remained after wiping. Specifically, the lubricant residual ratio is expressed as [(absorbance before cleaning) - (absorbance after cleaning)] / [(absorbance before cleaning) - (absorbance derived from the polyester elastomer)] × 100 in the region of 1360 to 1370 cm⁻¹.

### Squeak test (presence or absence of squeak):

The 100 mm square test piece was left to stand in an environment of 23°C/50% RH for two weeks. The molded product was then sprayed with water or heptane and wiped using a thrust abrasion tester. A wiping cloth was placed between the cylindrical test piece SUS-65C and the molded product, and the wiping test was carried out under a load of 0.5 MPa, a sliding speed of 50 rpm, and a wiping time of 5 minutes. Furthermore, water was dropped onto the wiped surface of the molded product, and the molded product was subjected to a thrust abrasion test to check for the presence or absence of squeak. The cylindrical test pieces used in the thrust abrasion test were products injection-molded from the same resin as the 100 mm square test pieces at a cylinder temperature of 240°C. The molded product was subjected to the sliding test which was carried out under a load of 0.5 MPa, a sliding speed of 50 rpm, and a test time of 5 minutes. The squeak generated during the sliding test was measured using a Sound Level Meter NL-20 manufactured by Rion Co., Ltd.

### Tensile test after heat aging (elongation at break) :

An injection-molded product (width 100 mm, length 100 mm, thickness 2 mm) was prepared at a cylinder temperature of 240°C and a mold temperature of 50°C. A test piece was prepared by punching out the injection-molded product in the direction perpendicular to the resin flow direction to form a JIS No. 3 dumbbell shape. The test piece was annealed in a hot air dryer at 150°C for 500 hours. The elongation at break was then measured in accordance with JIS K6251:2010.

### Flex fatigue resistance test:

With a De Mattia flex-cracking tester BE-102 (manufactured by TESTER SANGYO CO., LTD.), a predetermined test piece described below was subjected to repeated flexing in such a manner that the distance between chucks was changed between 75 mm and 19 mm at a rate of 300 times/min in an atmosphere at 130°C to evaluate flex fatigue resistance on the basis of the number of cycles of flexing before fracture. The test piece used was an injection-molded product (width 20 mm, length 100 mm, thickness 3.6 mm, groove of R 2.4 across the entire 20 mm width of the central section in the longitudinal direction) prepared at a cylinder temperature of 240°C and a mold temperature of 50°C.

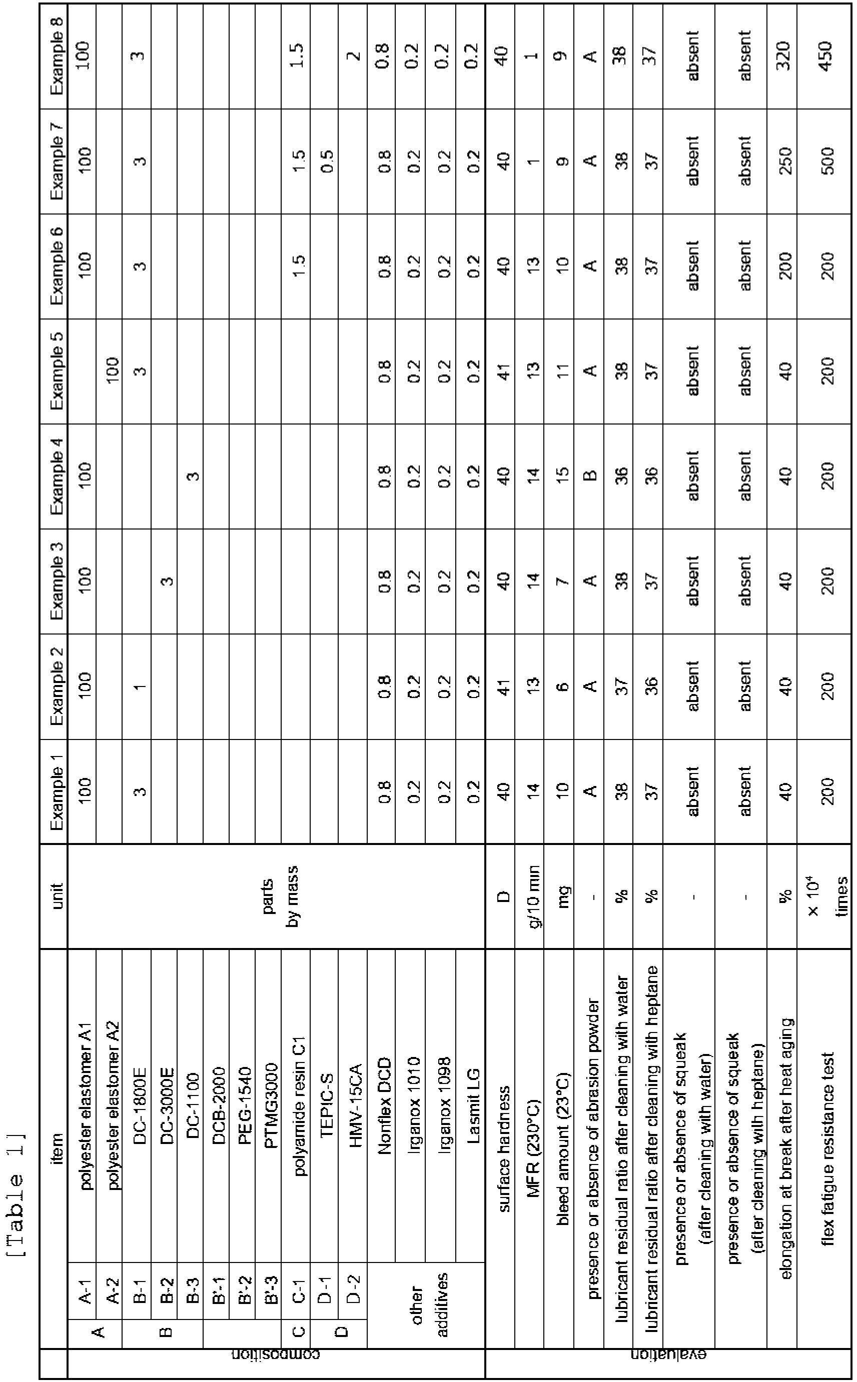

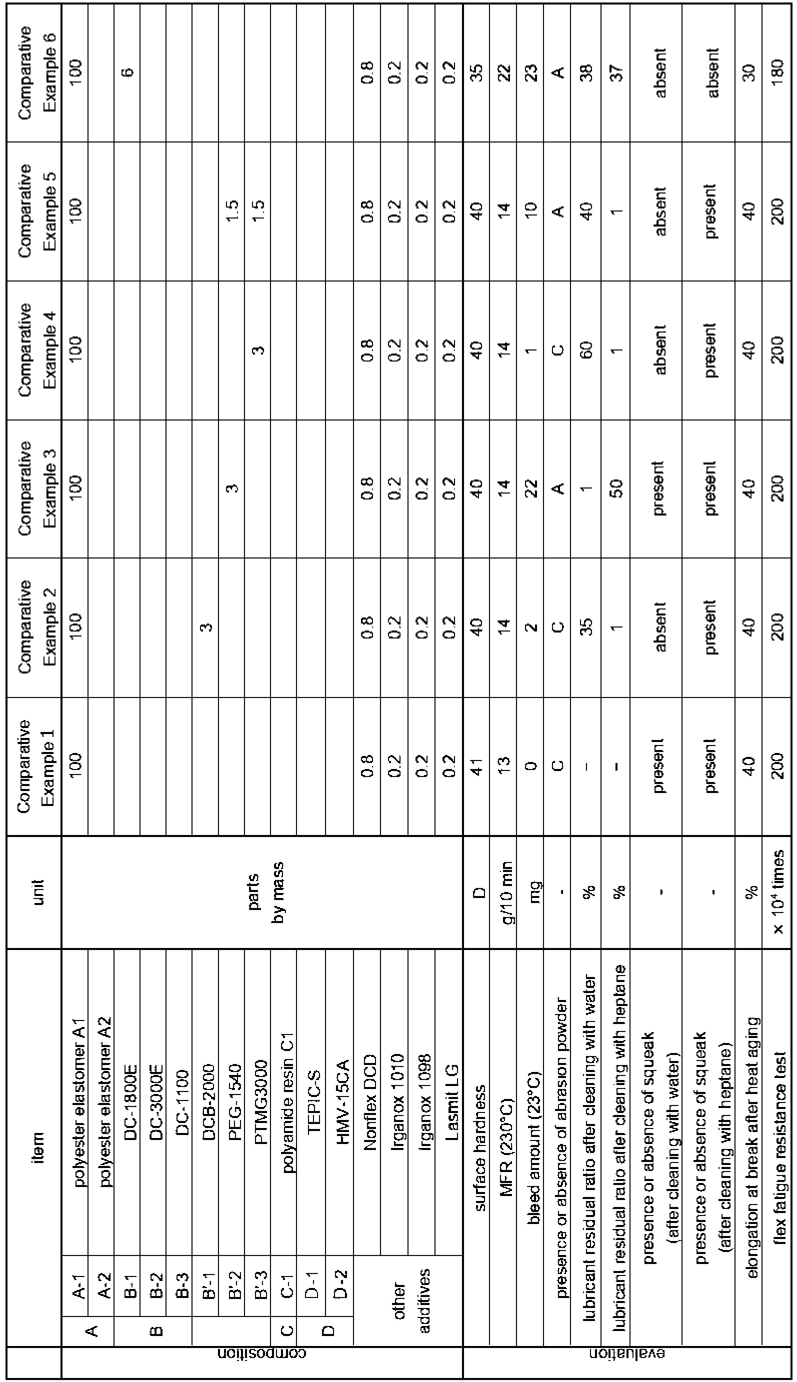

In Examples 1 to 8, by blending a specific liquid lubricant (polyoxytetramethylene polyoxyethylene glycol (B)) with a polyester elastomer, it was possible to provide resin compositions which exhibit excellent bleed-out properties, long-term stable abrasion resistance, high lubricant residual ratio after cleaning with water and cleaning with heptane, and squeak resistance while maintaining mechanical properties. In particular, in Examples 1 to 3 and 5 to 8, molecular weight of polyoxytetramethylene polyoxyethylene glycol (B) is higher than Example 4, resulting in superior results in the abrasion tests. In Examples 6 to 8, a polyamide resin (C) was further blended, whereby resin compositions exhibited improved heat aging resistance while maintaining squeak resistance. In Examples 7 and 8, a thickener (D) was further blended, whereby resin compositions exhibited a low MFR and improved flex fatigue resistance.

In Comparative Example 1, since no lubricant component was added, bleed-out of the lubricant onto the surface of the molded product did not occur, resulting in poor abrasion resistance and occurrence of squeak after both cleaning with water and cleaning with heptane. Since no lubricant component was added, the lubricant residual ratios after cleaning with water and cleaning with heptane were not evaluated.

In Comparative Example 2, polyoxytetramethylene polyoxypropylene glycol (DCB-1000), which has different copolymerization components, was added as the lubricant component. Due to lack of an ethylene oxide unit, polyoxytetramethylene polyoxypropylene glycol (DCB-1000) was highly compatible with a polyester elastomer, resulting in insufficient bleed amount. Furthermore, due to easiness in dissolution in heptane, polyoxytetramethylene polyoxypropylene glycol (DCB-1000) exhibited low lubricant residual ratio after cleaning with heptane, resulting in the occurrence of squeak.

In Comparative Example 3, polyethylene glycol (PEG-1540) was added as the lubricant component. Polyethylene glycol (PEG-1540) has low compatibility with polyester elastomer and high bleed amount. Because this lubricant (polyethylene glycol (PEG-1540)) is a highly polar polyether, it exhibited low lubricant residual ratio after cleaning with water, causing the occurrence of squeak. Furthermore, although polyethylene glycol (PEG-1540) exhibited high lubricant residual ratio after cleaning with heptane, squeak still occurred during the squeak test after cleaning with heptane. This is because the thrust abrasion test in the squeak test was carried out with water dropping even the squeak test is "after cleaning with heptane".

In Comparative Example 4, poly(tetramethylene oxide) glycol (PTMG3000) was added as the lubricant component. Due to too high compatibility with the polyester elastomer, poly(tetramethylene oxide) glycol (PTMG3000) exhibited low bleed amount. Also, poly(tetramethylene oxide) glycol (PTMG3000) exhibited low lubricant residual ratio after cleaning with heptane, resulting in the occurrence of squeak.

In Comparative Example 5, polyethylene glycol (PEG-1540) and poly(tetramethylene oxide) glycol (PTMG3000) were added as the lubricant component. In Comparative Example 5, the tetramethylene oxide unit and the ethylene oxide unit were not contained in one molecule. Instead, each of the tetramethylene oxide unit and the ethylene oxide unit was included in separate compounds. Similar to Comparative Examples 3 and 4, the lubricant residual ratio was low after cleaning with heptane, resulting in the occurrence of squeak.

In Comparative Example 6, a large amount of polyoxytetramethylene polyoxyethylene glycol (DC-1800E) was added as the lubricant component. Although good squeak resistance was exhibited, the surface hardness of the molded product itself decreased and the MFR increased significantly, resulting in a significant decrease in mechanical properties.

### Industrial Applicability

According to the present invention, it is possible to provide a polyester elastomer resin composition which can provide long-term, continuous abrasion resistance, and in which the lubricant is not removed even when the molded product is subjected to cleaning with water or heptane, resulting in excellent squeak resistance after cleaning. This makes the composition useful for applications requiring the above-mentioned excellent properties, such as automobile and home appliance parts. The composition is particularly useful for automobile interior applications and automobile suspension components, which require high sliding properties.

## Claims

1. A polyester elastomer resin composition **characterized by** containing 0.1 to 5 parts by mass of polyoxytetramethylene polyoxyethylene glycol (B) per 100 parts by mass of a polyester elastomer (A) which comprises a hard segment and at least one soft segment, wherein the hard segment consists of a polyester containing an aromatic dicarboxylic acid and an aliphatic and/or alicyclic diol as constituent components, and wherein the soft segment is selected from the group consisting of aliphatic polyether, aliphatic polyester, and aliphatic polycarbonate.

2. The polyester elastomer resin composition according to claim 1, wherein the number-average molecular weight of the polyoxytetramethylene polyoxyethylene glycol (B) is 800 to 4000.

3. The polyester elastomer resin composition according to claim 1 or 2, wherein the ratio of a tetramethylene oxide unit to an ethylene oxide unit in the polyoxytetramethylene polyoxyethylene glycol (B) is 10 : 90 to 90 : 10 (molar ratio).

4. The polyester elastomer resin composition according to claim 1 or 2, wherein the soft segment of the polyester elastomer (A) is an aliphatic polyether.

5. The polyester elastomer resin composition according to claim 1 or 2, wherein the polyester elastomer resin composition further contains 0.5 to 10 parts by mass of a polyamide resin (C) per 100 parts by mass of the polyester elastomer (A).

6. The polyester elastomer resin composition according to claim 1 or 2, wherein the polyester elastomer resin composition further contains 0.1 to 5 parts by mass of a thickener (D) per 100 parts by mass of the polyester elastomer (A), and wherein the thickener (D) is at least one compound selected from an epoxy compound and a carbodiimide compound.

7. The polyester elastomer resin composition according to claim 1 or 2, wherein a melt flow rate (MFR) value measured in accordance with a flow test method for thermoplastics defined in JIS K7210 at 230°C and a load of 2.16 kg is 3 g/10 min or less.
